**Europäisches Patentamt**

(19) **European Patent Office**

**Office européen des brevets**

(11) Veröffentlichungsnummer: **0 060 340**
**B1**

(12) **EUROPÄISCHE PATENTSCHRIFT**

(45) Veröffentlichungstag der Patentschrift:
14.11.84

(21) Anmeldenummer: 81109551.2

(22) Anmeldetag: 06.11.81

(51) Int. Cl.³: **F 23 K 3/00**, F 23 L 15/04,
F 23 N 1/02

(54) **Verfahren und Feuerungseinrichtung zur Energiegewinnung aus Stroh.**

(30) Priorität: 14.03.81 DE 3109923

(43) Veröffentlichungstag der Anmeldung:
22.09.82 Patentblatt 82/38

(45) Bekanntmachung des Hinweises auf die Patenterteilung:
14.11.84 Patentblatt 84/46

(84) Benannte Vertragsstaaten:
AT BE FR GB

(56) Entgegenhaltungen:
DE - A - 3 020 798
DE - A - 3 025 565
DE - B - 1 127 526
FR - A - 2 295 349
FR - A - 2 321 090
FR - A - 2 420 727
FR - A - 2 476 433
US - A - 3 035 621
US - A - 3 818 848

(73) Patentinhaber: **Bollmann, jun., Heinrich,
Woltwiescherstrasse 17, D-3201 Söhlde (DE)**
Patentinhaber: **Bollmann, sen., Heinrich,
Woltwiescherstrasse 17, D-3201 Söhlde (DE)**

(72) Erfinder: **Bollmann, jun., Heinrich,
Woltwiescherstrasse 17, D-3201 Söhlde (DE)**
Erfinder: **Bollmann, sen., Heinrich,
Woltwiescherstrasse 17, D-3201 Söhlde (DE)**

(74) Vertreter: **Arendt, Helmut, Dipl.-Ing., Hubertusstrasse 2,
D-3000 Hannover 1 (DE)**

EP 0 060 340 B1

## Beschreibung

Die Erfindung betrifft eine Feuerungseinrichtung zur Energiegewinnung aus in Form von Hochdruckballen vorliegendem Stroh, Papier u. dgl. brennbarem Material mit einem Heizkessel, dessen Brennstoffzuführöffnung in einer Vertikalebene liegt.

Durch die Verknappung und damit einhergehende Preissteigerung bei Heizöl, Gas und Kohle wird die Nutzung des im Stroh befindlichen Energiepotentials, insbesondere durch landwirtschaftliche Betriebe, immer lohnender. Der untere Heizwert von Stroh bei einem üblichen Feuchtegehalt von 14% beträgt immerhin etwa ⅓ des von leichtem Heizöl. Er liegt damit höher als bei Torf- und Braunkohle und erreicht fast den Wert von Holz. Die Wärmegewinnung aus Stroh ist jedoch bisher durch die mit der Strohverbrennung in Heizungsanlagen verbundenen Schwierigkeiten wirtschaftlich bedeutungslos geblieben.

Besonders problematisch ist der hohe Gehalt an flüchtigen Bestandteilen für die Strohverbrennung. Es handelt sich um jene Bestandteile, die bei Erwärmung über 300° C unter Sauerstoffabschluss freigesetzt werden. Stroh weist mit 65% der lufttrockenen Substanz den absoluten Höchstwert auf, worin auch das grösste Problem der Verfeuerung dieses Brennstoffes liegt. Bei einer Ofenkonstruktion, bei der der gesamte eingelagerte Brennstoff in kurzer Zeit, d.h. fast gleichzeitig in Glut kommt, werden nach Übersteigen einer Temperatur von 300° C innerhalb weniger Minuten 65% des Brennstoffes in Form von brennbarem Gas freigesetzt. Solche Öfen werden deshalb als Durchbrandöfen bezeichnet. Durch die notwendige Leistungsbegrenzung des Kessels erfolgt entweder eine unvollständige Verbrennung, verbunden mit einem schlechten Wirkungsgrad und hohen Emissionswerten an Staub, Russ und Teer, oder der Brennraum kann jeweils nur mit einem geringen Teil seines Fassungsvermögens an Stroh gefüllt werden, das nach dem Durchbrennen der der geforderten Teilleistung entsprechenden geringen Menge sofort ersetzt werden muss. Ein kontinuierlicher Brennvorgang ist dadurch jedoch nicht möglich. Zur Beseitigung dieser Schwierigkeiten sind bereits Heizkessel zur Verfeuerung von Stroh entwickelt worden, deren Brennraum in eine Vor- und eine Nachbrennkammer unterteilt sind.

Bei einem Ofen mit einer Vorbrennkammer gibt das eingelagerte Stroh bei Übersteigen der Temperatur von 300° C die flüchtigen, brennbaren Bestandteile frei, die daraufhin in der Nachbrennzone unter Zuführung von Sekundärluft vollständig verbrennen. Das Rauchgas wird dann sich anschliessenden Wärmetauschern zugeführt. Hochdruckballen mit einer Dichte von 70 bis 120 kg/m³ haben besonders bei der Wohnhausbeheizung ihren hauptsächlichen Anwendungsbereich. Aus Kostengründen wurde bisher auf eine automatische Beschickung bei kleineren Heizungsanlagen verzichtet. Die Beschickung der Vorbrennkammer mit Ballen erfolgt deshalb je nach Leistungsbedarf alle 2 bis 4 h, mit dem Nachteil einer ständig erforderlichen Kontrolle und einer Wärmeerzeugung in Intervallen.

Bekannt ist ferner ein Feuerungskessel für Hochdruckballen, bei dem die Ballen vertikal in der Vorbrennkammer übereinandergestapelt werden. Der unterste Ballen ruht dabei auf einem Rost, dessen Unterseite zunächst abgebrannt wird. Die dabei entstehenden flüchtigen Bestandteile werden horizontal in die neben der Vorbrennzone befindliche Nachbrennzone gezogen und unter Zuführung von Sekundärluft verbrannt. Ein solches System hat den Nachteil, dass der Ofen durch den Ballenvorrat eine erhebliche Höhe hat und der Einsatz eines Gebläses unumgänglich ist, da die in der Vorbrennzone erzeugten flüchtigen Bestandteile durch ihren Wärmeauftrieb nicht in der Lage sind, vollständig ohne einen künstlich erzeugten Zug in die Nachbrennkammer zu strömen. Ferner brennt der unterste Ballen nicht gleichmässig ab, sondern es bilden sich Hohlräume und Brücken, die zu einem plötzlichen Nachrutschen des sich vertikal erstreckenden Ballenvorrats führen. Durch die notwendige Leistungsbegrenzung der Kessel in Teillastbereichen erfolgt entweder eine unvollständige Verbrennung, verbunden mit einem schlechten Wirkungsgrad und hohen Emissionswerten an Staub, Russ und Teer, oder der Brennraum kann jeweils nur mit einem geringen Teil seines Fassungsvermögens an Stroh gefüllt werden, das nach dem Durchbrennen der der geforderten Teilleistung entsprechenden geringen Menge sofort ersetzt werden muss. Ein kontinuierlicher Brennvorgang ist dadurch jedoch nicht möglich. Die unvollständige Verbrennung wird durch die hohe Dichte eines Hochdruckballens verursacht. Es ist nicht möglich, die jeweils gewünschte Strohmenge von der Stirnseite eines in den Feuerungsraum reichenden Strohballens einwandfrei abzubrennen. Auch die bei bereits bekannten Ausführungsformen eingesetzten Verbrennungsluftgebläsen können nicht die gewünschte Abhilfe schaffen. Deshalb wurde versucht, vor der Verbrennung das Stroh zu häckseln bzw. zu mahlen und in dieser Form den Heizungskesseln zuzuführen. Ein solches System ist jedoch sehr aufwendig, da für das Häckseln und Mahlen eigens hergerichtete Aggregate und Transportmittel zur Verfügung gestellt werden müssen, abgesehen von der zur Verfügung zu stellenden Fremdenergie.

Schwierig beim Verbrennen von Stroh ist die Einhaltung einer automatischen Brennstoffzufuhr in Abhängigkeit von dem Leistungsbedarf. Aus der französischen Patentschrift Nr. 2420727 ist für einen Mehrstoffheizkessel eine automatische Beschickungseinrichtung, insbesondere für Holz, zu entnehmen. Sie besteht aus einem Kasten zur Aufnahme eines grossen Holzscheites, dessen eines Ende bis an die der Zufuhröffnung gegenüberliegende Brennraumrückwand reicht und dessen anderes Ende an einem innerhalb des Kastens in dessen Längsrichtung verschiebbaren Wagen anliegt. Der Wagen drückt gegen das äussere Ende des Holzscheites, so dass dieses ständig unter einer in den Brennraum gerichteten Schubkraft steht. Das Holzscheit kann dadurch nach und nach an seinem in den Brennraum reichenden Ende abgebrannt werden. Die Schubkraft des auf Rollen fahrenden Wagens wird über an Zugseilen hängenden Gegengewichten aufgebracht. Die vorbekannte Ausführung ist jedoch in dieser Form für das Verbrennen von in Form von Hochdruckballen vorliegendem Stroh nicht geeignet, da hierdurch ein angestrebtes Abbrennen an der Stirnseite eines Strohballens nicht möglich ist. Die Stirnseite des Strohballens würde an der Brennraumrückseite fest anliegen und ein gezieltes Abbrennen verhindern.

Eine notwendige Auflockerung der Ballenstirnseite mit Hilfe von Messern, wie beispielsweise in einer rotierenden Futtermühle nach der US-PS Nr. 3035621 dargestellt, genügt ebenfalls nicht. Diese Vorrichtung wäre lediglich für das Zerhäckseln der Strohhalme zu kleinsten, sofort verbrennenden Teilchen einsetzbar, vorausgesetzt, die Schneidvorrichtung wäre aus einem entsprechenden, die hohen Verbrennungstemperaturen in einem Brennraum überdauernden Material gefertigt. Einfacher dagegen wäre die getrennte Behandlung des Brennstoffes Stroh zunächst in einer Häckseleinrichtung mit anschliessendem Zuführen in den Heizkessel, was jedoch die bereits vorstehend genannten Nachteile aufweist.

Der Erfindung liegt die Aufgabe zugrunde, eine Feuerungseinrichtung der eingangs genannten Art so zu gestalten, dass ein gleichmässiges, auch an geringe Leistungen anpassbares Abbrennen eines Ballens bei automatischer Beschickung ermöglicht wird. Die erfindungsgemässe Lösung ist gekennzeichnet durch ein im Brennraum angeordnetes Ballenwiderlager in Verbindung mit einer in den Ballen greifenden Vorrichtung zum Auflockern der der Verbrennung zugeführten und der zu erzeugenden Wärmemenge entsprechenden Brennstoffmenge.

Vorteilhafterweise besteht das Ballenwiderlager aus einem im wesentlichen in der Ebene der der Verbrennung zugeführten Ballenstirnseite liegenden und um eine sich in Ballenvorschubrichtung erstreckende Achse drehbaren Teilringstück, dessen in Drehrichtung vorderes Ende als Spitze ausgebildet und mit einer auf den Ballen gerichteten Neigung versehen ist. Es wird von drei Haltestangen gehalten, die so angeordnet sind, dass die Ringspitze ohne jede Unterstützung bleibt. Dadurch entfaltet die Ringspitze eine optimale Wirkung beim Auflockern des Strohs für die Verbrennung, und gleichzeitig kann die sich bei der Verbrennung bildende Asche aus den Haltestangen des Ballenwiderlagers ohne Schwierigkeiten herausfallen. An der dem Ring gegenüberliegenden Seite sind die Stäbe an einem Kreuzprofil befestigt, das während des Drehvorgangs die entstehende Asche zerbröselt.

Das Ballenwiderlager kann über einen Elektromotor angetrieben werden. Zur Steuerung der Drehgeschwindigkeit des Ballenwiderlagers können sowohl mechanische als auch elektrische Elemente eingesetzt werden.

Zur Übertragung von Wärme aus dem Rauchgas auf die dem Kessel zugeführte Verbrennungsluft kann ein Luftvorwärmer in Gestalt eines das Rauchgasrohr umgebenden Rohres dienen, so dass die Verbrennungsluft in dem Ringspalt zwischen dem äusseren und dem inneren Rohr zum Kessel gelangt.

Die Ballenzufuhreinrichtung besteht vorzugsweise aus einem geschlossenen Kanal mit einer verschliessbaren Füllöffnung. Sie weist eine Vorschubeinrichtung auf, die aus einem Seil- oder Kettenzug mit an beiden Seiten des Kanals entlanggeführten Seilen und einem an der Ballenrückseite angreifenden Druckbügel besteht. Die Zugseile können über im vorderen, d.h. dem Heizkessel zugewandten Bereich der Zufuhreinrichtung, angeordnete Umlenkrollen geführt sein. Von besonderem Vorteil ist es, eine Umlenkrolle über ein auf der gleichen Achse sitzendes Antriebsrad und eine geeignete Kraftübertragung, durch beispielsweise einen Riemen, ein Seil oder eine Kette, mit dem Ballenwiderlager zu verbinden. Ferner kann auf diese Weise gleichzeitig eine Verbindung mit unterhalb der Vorbrennzone angeordneten Aschenförderschnecken hergestellt werden.

Die Teillast des Kessels kann durch steuerbare Drehungen des Ballenwiderlagers und eine Erwärmung der Verbrennungsluft mittels am Nutzwärmetauscher nicht benötigter Wärmemengen geregelt werden. Zu diesem Zweck ist es von Vorteil, das Ballenwiderlager während des Verbrennungsprozesses in Abhängigkeit von der Temperatur des Brennraumes zu drehen, d.h. die Winkelgeschwindigkeit des Ballenwiderlagers zu verändern. Dadurch gelingt es, den dem Brennraum zuzuführenden Brennstoff auf eine der jeweils gewünschten Wärmemenge entsprechende Menge zu beschränken, ohne die Qualität des Verbrennungsprozesses zu verringern, d.h., dass auch in den jeweiligen Teillastbereichen die Verbrennung bei gleichbleibend günstiger Brennraumtemperatur gestaltet werden kann.

Praktisch wird eine Regelung der dem Nutzwärmetauscher zur Verfügung gestellten Wärmemenge erreicht, wenn dem Rauchgas *vor* dem Eintritt in den Nutzwärmetauscher ein Teil seiner Wärme entzogen und über die Verbrennungsluft in den Brennraum zurückgeführt wird. Dadurch wird dazu beigetragen, dass die Brennraumtemperatur konstant auf der gewünschten Höhe gehalten werden kann.

Weitere, die Erfindung vorteilhaft gestaltende Merkmale sind den Unteransprüchen zu entnehmen.

Die Stirnseite eines in die Vorbrennzone reichenden Strohballens wird gleichmässig abgebrannt, wobei die Brennfläche nahezu vertikal verbleibt. Die dabei erzeugten flüchtigen Bestandteile können entsprechend der thermischen Auftriebswirkung ohne künstlich erzeugten Zug zur Verbrennung gelangen. Entsprechend dem Abbrand wird der Strohballen durch die Kraft des Seilzugs ständig nachgeschoben und gegen das Ballenwiderlager gedrückt. Die Gefahr einer Brückenbildung durch verbranntes bzw. nicht vollständig verbranntes Stroh im Bereich des Ballenwiderlagers besteht nicht. Die durch den Ballendruck unmittelbar an das Widerlager gepressten Stroh- oder Ascheteile werden spätestens nach einer Drehung freigesetzt und können ebenso vollständig verbrennen, wie die benachbarten Strohteile. Die Verbrennungsqualität auch im Teillastbereich ist so gut, dass die im Bundesemissionsschutzgesetz vorgeschriebenen Werte von max. 300 mg Feststoffe pro Kubikmeter problemlos unterschritten werden. Entsprechend hoch ist der $CO_2$-Anteil. Die erfindungsgemässe Anlage ist also auch in der warmen Jahreszeit einsetzbar, wenn lediglich Brauchwasser erwärmt werden muss.

In der Zeichnung ist ein Ausführungsbeispiel einer Vorrichtung zur Durchführung des erfindungsgemässen Verfahrens in Form von schematischen Skizzen dargestellt und nachstehend erläutert. Es zeigen:

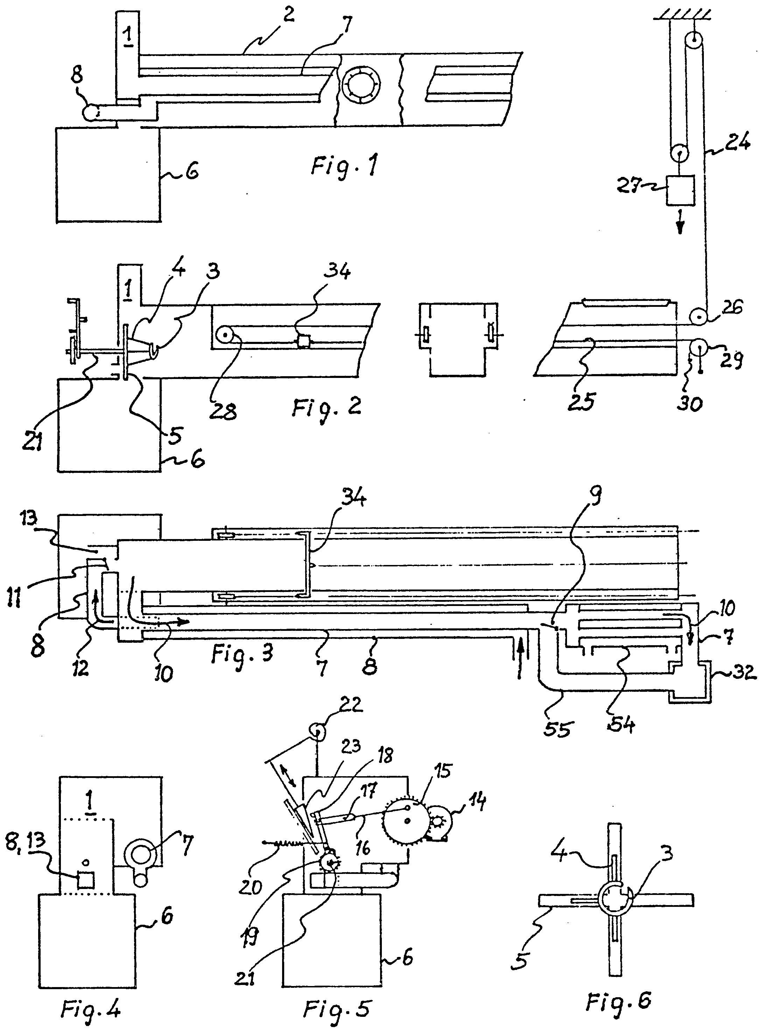

Fig. 1 die Seitenansicht des Kessels in Umrissen mit der Rohrführung,

Fig. 2 einen Längsschnitt durch den Kessel im Bereich des Ballenwiderlagers mit Vorrichtungsteilen für den Ballenvorschub,

Fig. 3 die Draufsicht auf den Kessel,

Fig. 4 die Stirnansicht des Kessels,

Fig. 5 die Stirnansicht des Kessels mit mechanischen Steuerelementen zum Antrieb des Ballenwiderlagers, und

Fig. 6 die Stirnansicht des Ballenwiderlagers.

In den Figuren der Zeichnungen bedeuten im einzelnen: 1 den Brennraum des Kessels, 2 den Ballenzufuhrkanal, 3 das Widerlager, 4 die Haltestangen des Widerlagers, 5 das Kreuzprofil zum Zerbröseln der Asche, 6 den Aschenkasten, 7 das teilweise gerippte Rauchgasrohr, 8 das Zufuhrrohr für die Verbrennungsluft, 9 eine Rauchgasregelklappe, 10 die Rauchgasströmung, 11 eine Regelklappe für die Verbrennungsluft, 12 die Verbrennungsluftströmung, 13 eine Öffnung für direkte Verbrennungsluftzufuhr, 14 einen Elektromotor für den Antrieb des Widerlagers, 15 ein Untersetzungsgetriebe, 16 eine Pleuelstange, 17 ein Langloch in der Pleuelstange, 18 einen Ratschenhebel, 19 das Antriebsrad für das Widerlager, 20 eine Rückstellfeder, 21 die Antriebswelle des Ballenwiderlagers, 22 einen Thermostat, 23 einen verstellbaren Anschlag für den Ratschenhebel, 24 Zugseile für den Ballenvorschub, 25 ein Rückholseil, 26 Seilrollen, 27 ein Zuggewicht, 28 Seilumlenkrollen am vorderen Ende des Ballenkanals, 29 eine Seilzugwinde, 30 eine Arretierungsklinke für die Seilzugwinde, 32 den Schornstein, 34 den Ballendruckbügel.

Der Kessel ist mit einem Brennraum 1 mit vertikaler Öffnung und horizontalem Einschub von Strohballen aus dem Ballenkanal 2 versehen. Die Ballen werden druckbelastet gegen das im Brennraum 1 befindliche, drehbar angeordnete Ballenwiderlager 3 geführt. Dem Widerlager nachgeordnet und mit diesem verbunden ist ein Aschenzerbröseler, der ständig dafür sorgt, dass sich die Asche nicht zusammenballen kann. Das Widerlager 3 ist so angeordnet, dass durch die Drehbewegung die zum Brennen benötigte Strohmenge aus dem Ballen herausgezogen wird, d.h. die entsprechende Strohmenge überwindet das Widerlager und erhält eine zum Brennen günstige Auflockerung.

Der sich mit dem Widerlager 3 drehende Aschenzerbröseler befördert die Asche in einen dem Brennraum 1 untergeordneten Aschenkasten 6. Dem Brennraum übergeordnet ist eine glockenförmig ausgebildete Brennzone, die auch als Nachbrennraum mit erst horizontaler (seitlicher), dann vertikal nach unten ziehender Brennkammer, an deren unterem Ende ein Rauchgas-Verbrennungsluft-Wärmetauscher angeschlossen ist, bezeichnet werden kann. Dieser Wärmetauscher kann in Gestalt zweier konzentrisch ineinander angeordneter Rohre ausgebildet sein, wobei das Aussenrohr in dem gezeigten Beispiel die Verbrennungsluft führt, während das Innenrohr das Rauchgasrohr 7 ist. Die Verbrennungsluft 12 strömt dem Rauchgas 10 in dem Ringraum zwischen den beiden Rohren 7 und 8 entgegen. Diesem Wärmetauscher folgt eine Rauchgasregelklappe 9 zur Rauchgasführung durch den Nutzwärmetauscher 54 in den Kamin 32. Ein Bypass 55 bildet eine Rauchgaskurzschlussverbindung zwischen dem Rohr 7 und dem Kamin 32, um gegebenenfalls den Nutzwärmetauscher vor Überhitzung zu schützen. Der aus den Rohren 7 und 8 bestehende Verbrennungsluftvorwärmer führt die Verbrennungsluft über ein Verbindungsrohr durch eine Verbrennungsluftregelklappe 11 zur Stirnseite der Brennkammer 1 durch den unteren Bereich des Brennraumes. Die Verbrennungsluftregelklappe 11 führt je nach Bedarf vorgewärmte Frischluft aus dem Verbrennungsluftvorwärmer oder nicht vorgewärmte Verbrennungsluft unmittelbar dem Brennraum zu.

Nach dem gezeigten Beispiel wird die vertikale Kraft eines Gewichts 27 über Umlenkrollen 26, 28 auf die im Ballenkanal 2 befindlichen Strohballen übertragen. Dieser Druck wird durch das im Brennraum befindliche Widerlager 3 aufgefangen.

Ein Elektromotor 14 mit nachgeordnetem Getriebe 15 treibt über eine Pleuelstange 16 mit einem Langloch 17 einen Ratschenhebel 18 an, der mit seinem unteren Ende eine Antriebsscheibe 19 der Widerlagerwelle 21 antreibt. Eine Zugfeder 20 sorgt für eine ständige Rückstellung des Ratschenhebels 18. Dadurch erfolgt ein Antrieb des Ratschenhebels nur in Arbeitsrichtung des Ratschenzahnrades. Das Widerlager 3 sowie der Aschenzerbröseler 5 werden über die Widerlagerwelle 21 in eine Drehbewegung mit kurzen Intervallen versetzt. Ein Thermostat 22 im Brennraum sorgt für eine Verlagerung eines keilförmigen Anschlags 23 und dadurch für einen längeren oder kürzeren Weg des Ratschenhebels 18. Auf diese Weise wird eine Änderung der Geschwindigkeit des Widerlagers 3 erzielt, und dadurch jeweils so viel Stroh dem Brennraum zugeführt, wie zur Erhaltung der günstigen Verbrennungstemperatur der Schwelgase erforderlich ist.

Ein nicht dargestellter Thermostat am Nutzwärmetauscher 54 steuert durch Änderung der Stellung der Verbrennungsluftregelklappe 11 die Zuführung der für den Nutzwärmetauscher günstigen Wärme. Die Verbrennungsluftregelklappe 11 beeinflusst dabei nicht die Menge der Verbrennungsluft, *sondern nur deren Temperatur.* Erwärmt sich der Nutzwärmetauscher höher als erwünscht, so führt die Verbrennungsluftregelklappe 11 Verbrennungsluft aus dem Verbrennungsluftvorwärmer, vermischt mit frischer Verbrennungsluft oder ausschliesslich vorgewärmte Verbrennungsluft in den Brennraum. Hierdurch werden die dem Nutzwärmetauscher zugeführten Rauchgase abgekühlt und die dem Brennraum zugeführte Verbrennungsluft angewärmt. Die angewärmte Verbrennungsluft führt im Brennraum zu einer höheren Temperatur, veranlasst den Thermostat zum Verändern des Anschlags 23 für den Ratschenhebel 18, wodurch die Umdrehungsgeschwindigkeit des Widerlagers 3 verringert wird. In Abhängigkeit hiervon wird weniger Stroh in den Brennraum gezogen. Die dadurch entstehende geringere Rauchgasmenge führt zu einer Senkung der Temperatur im Nutzwärmetauscher. Der Verbrennungsvorgang selbst kann zu jedem Zeitpunkt der Regelung in der gewünschten bestmöglichen Weise erfolgen, d.h. die erzeugte Wärmemenge wird nicht durch eine Verschlechterung der Verbrennung durch Drosselung der Verbrennungsluftzufuhr bzw. durch sinkende Temperatur im Brennraum verändert. Die Anpassung der Brennstoffzufuhr wird mit Hilfe einfachster technischer Mittel erreicht. Die erfindungsgemässe Einrichtung zur Durchführung des Verfahrens eignet sich hervorragend zum Einsatz in Haushalten, insbesondere in solchen für landwirtschaftliche Betriebe. Durch die günstige Verbrennung werden die strengen Auflagen des Emissionsschutzgesetzes ohne Schwierigkeiten erfüllt.

Wird bei voller Ausnutzung der Verbrennungsluftvorwärmung dem Nutzwärmetauscher 54 noch zu viel Wärme zugeführt, so sorgt ein zweiter, nicht dargestellter Thermostat am Nutzwärmetauscher für eine Schliessung der Rauchgasregelklappe 9 und führt einen Teil bzw. die gesamte Rauchgasmenge durch das Rauchgasrohr 55 am Nutzwärmetauscher 54 vorbei in den Kamin.

Sinkt die Temperatur des Nutzwärmetauschers unter einen gewünschten Grenzwert, so sorgen die Thermostate für eine Regelung in umgekehrter Richtung. Bei gleichbleibend günstiger Verbrennungstemperatur im Heizkessel lässt sich der Brennstoffbedarf bei Durchführung der erfindungsgemässen Verfahrens um über 50% senken.

## Patentansprüche

1. Feuerungseinrichtung zur Energiegewinnung aus in Form von Hochdruckballen vorliegendem Stroh, Papier u. dgl. brennbarem Material mit einem Heizkessel (1), dessen Brennstoffzufuhröffnung in einer Vertikalebene liegt, gekennzeichnet durch ein im Brennraum (1) angeordnetes Ballenwiderlager (3) in Verbindung mit einer in den Ballen greifenden Vorrichtung zum Auflockern der der Verbrennung zugeführten und der zu erzeugenden Wärmemenge entsprechenden Brennstoffmenge.

2. Einrichtung nach Anspruch 1, dadurch gekennzeichnet, dass das Ballenwiderlager (3) aus einem in der Ebene der Ballenstirnseite gebogenen Stab besteht, von welchem eine in die Stirnseite des Ballen greifende Spitze abzweigt.

3. Einrichtung nach einem der Ansprüche 1 oder 2, dadurch gekennzeichnet, dass das Ballenwiderlager (3) aus einem im wesentlichen in der Ebene der der Verbrennung zugeführten Ballenstirnseite liegenden und um eine sich in Ballenvorschubrichtung erstreckende Achse drehbaren Teilringstück besteht, dessen in Drehrichtung vorderes Ende als Spitze ausgebildet und mit einer auf den Ballen gerichteten Neigung versehen ist.

4. Einrichtung nach einem oder mehreren der Ansprüche 1 bis 3, dadurch gekennzeichnet, dass das Ballenwiderlager (3) mit einem Antriebsmotor (14) verbunden ist.

5. Einrichtung nach einem oder mehreren der Ansprüche 1 bis 4, dadurch gekennzeichnet, dass hinter dem Ballenwiderlager (3) wenigstens ein Stab (5) zur Zerbröselung der verbrannten Rückstände angeordnet ist.

6. Einrichtung nach einem oder mehreren der Ansprüche 1 bis 5, dadurch gekennzeichnet, dass der Antrieb (14) des Ballenwiderlagers durch einen Brennraumthermostat (22) steuerbar ist.

7. Einrichtung nach einem oder mehreren der Ansprüche 1 bis 6, dadurch gekennzeichnet, dass der Antrieb (14) des Ballenwiderlagers (3) durch mechanische Mittel steuerbar ist.

8. Einrichtung nach einem oder mehreren der Ansprüche 1 bis 7, dadurch gekennzeichnet, dass die Drehgeschwindigkeit des Ballenwiderlagers (3) durch eine unmittelbare Drehzahlsteuerung des Antriebsmotors über einen elektronischen Steuerkreis veränderbar ist.

9. Einrichtung nach einem oder mehreren der Ansprüche 1 bis 8, dadurch gekennzeichnet, dass der Nutzwärmetauscher (54) von dem Heizkessel getrennt und ein Rauchgasverbrennungsluftvorwärmer (7, 8) zwischen dem Nutzwärmetauscher (54) und dem Heizkessel angeordnet ist.

10. Einrichtung nach einem oder mehreren der Ansprüche 1 bis 9, dadurch gekennzeichnet, dass zwischen dem Verbrennungsluftvorwärmer (7, 8) und dem Schornstein (32) ein den Nutzwärmetauscher (54) schützendes Rauchgasumgehungsrohr (55) vorgesehen ist.

11. Einrichtung nach einem oder mehreren der Ansprüche 1 bis 10, dadurch gekennzeichnet, dass die Ballenzufuhreinrichtung aus einem geschlossenen Strohballenkanal (2) mit einer Ballenvorschubeinrichtung besteht.

12. Einrichtung nach Anspruch 11, dadurch gekennzeichnet, dass die Ballenvorschubeinrichtung aus einem Seil- bzw. Kettenzug (24) mit einem an der Ballenrückseite angreifenden Druckbügel (34) besteht.

13. Verfahren zur Energiegewinnung aus in Form von Hochdruckballen vorliegendem Stroh, Papier u. dgl. unter Verwendung einer Einrichtung nach einem oder mehreren der Ansprüche 1 bis 12, dadurch gekennzeichnet, dass die Teillast des Kessels durch eine Steuerung der Drehungen des Ballenwiderlagers (3) und eine Erwärmung der Verbrennungsluft mittels am Nutzwärmetauscher (54) nicht benötigter Wärmemengen geregelt wird.

14. Verfahren nach Anspruch 13, dadurch gekennzeichnet, dass die Drehgeschwindigkeit des Ballenwiderlagers (3) während des Verbrennungsprozesses in Abhängigkeit von den im Brennraum erzeugten und im Nutzwärmetauscher (54) abgenommenen Wärmemengen geregelt wird.

15. Verfahren nach den Ansprüchen 13 und/oder 14, dadurch gekennzeichnet, dass dem Rauchgas vor dem Eintritt in den Nutzwärmetauscher (54) überschüssige Wärmemengen entzogen und über die Verbrennungsluft (12) in den Brennraum (1) zurückgeführt werden.

## Revendications

1. Installation de chauffage pour la production d'énergie à partir de paille, de papier ou d'une matière combustible analogue présentés sous forme de balles fortement comprimées, qui comprend une chaudière (1) dont l'orifice d'alimentation en combustible est situé dans un plan vertical, caractérisée en ce qu'elle comprend une butée de balle (3) agencée dans la chambre de combustion (1) en association avec un dispositif prenant dans les balles pour ameublir la quantité de combustible amenée à la combustion et correspondant à la quantité de chaleur à produire.

2. Installation suivant la revendication 1, caractérisée en ce que la butée de balle (3) consiste en une barre incurvée dans le plan de la face d'about de la balle et d'où part une pointe prenant dans la face d'about de la balle.

3. Installation suivant l'une des revendications 1 ou 2, caractérisée en ce que la butée de balle (3) consiste en un organe en arc de cercle situé en substance dans le plan de la face d'about de la balle amenée à la combustion et susceptible de rotation autour d'un axe s'étendant dans le sens d'avancement des balles, organe dont l'extrémité antérieure dans le sens de rotation est conformée en pointe et présente une inclinaison orientée vers la balle.

4. Installation suivant une ou plusieurs des revendications 1 à 3, caractérisée en ce que la butée de balle (3) est reliée à un moteur d'entraînement (14).

5. Installation suivant une ou plusieurs des revendications 1 à 4, caractérisée en ce que, au moins, une tige (5) pour la fragmentation des résidus brûlés est agencée derrière la butée de balle (3).

6. Installation suivant une ou plusieurs des revendications 1 à 5, caractérisée en ce que le dispositif d'entraînement (14) de la butée de balle peut être commandé par un thermostat (22) de la chambre de combustion.

7. Installation suivant une ou plusieurs des revendications 1 à 6, caractérisée en ce que le dispositif d'entraînement (14) de la butée de balle (3) peut être commandé par des moyens mécaniques.

8. Installation suivant une ou plusieurs des revendications 1 à 7, caractérisée en ce que la vitesse de rotation de la butée de balle (3) est variable à l'intervention d'une régulation directe du nombre de tours du moteur d'entraînement par un circuit de commande électronique.

9. Installation suivant une ou plusieurs des revendications 1 à 8, caractérisée en ce que l'échangeur de chaleur (54) est distinct de la chaudière et en ce qu'un préchauffeur de l'air de combustion par les gaz brûlés (7, 8) est agencé entre l'échangeur de chaleur (54) et la chaudière.

10. Installation suivant une ou plusieurs des revendications 1 à 9, caractérisée en ce qu'un tube de dérivation des gaz brûlés (55) protégeant l'échangeur de chaleur (54) est agencé entre le préchauffeur d'air de combustion (7, 8) et la cheminée (32).

11. Installation suivant une ou plusieurs des revendications 1 à 10, caractérisée en ce que l'installation d'amenée des balles consiste en un canal fermé (2) pour balles de paille muni d'un dispositif d'avancement des balles.

12. Installation suivant la revendication 11, caractérisée en ce que le dispositif d'avancement des balles consiste en un mécanisme de traction à câble ou à chaîne (24) muni d'un poussoir (34) attaquant la face arrière des balles.

13. Procédé de production d'énergie à partir de paille, de papier ou d'une matière analogue présentés sous forme de balles fortement comprimées au moyen d'une installation suivant une ou plusieurs des revendications 1 à 12, caractérisé en ce que la charge partielle de la chaudière est réglée par commande de la rotation de la butée de balle (3) et en ce qu'un chauffage de l'air de combustion est réglé au moyen de quantités de chaleur non consommées à l'échangeur de chaleur (54).

14. Procédé suivant la revendication 13, caractérisé en ce que la vitesse de rotation de la butée de balle (3) est réglée pendant le processus de combustion en fonction des quantités de chaleur produites dans la chambre de combustion et absorbées dans l'échangeur de chaleur (54).

15. Procédé suivant les revendications 13 et/ou 14, caractérisé en ce que les quantités de chaleur en excès sont soustraites aux gaz brûlés avant l'entrée dans l'échangeur de chaleur (54) et en ce qu'elles sont ramenées dans la chambre de combustion (1) par l'intermédiaire de l'air de combustion (12).

## Claims

1. Firing equipment for producing energy from straw, paper and similar combustible material, present in the form of highly compressed bales, with a heating boiler (1), the fuel feed opening of which is located in a vertical plane, characterised by a bale abutment (3), located in the combustion chamber (1), in conjunction with a device, reaching into the bale, for loosening the quantity of fuel fed to the combustion and corresponding to the quantity of heat to be generated.

2. Equipment according to Claim 1, characterised in that the bale abutment (3) consists of a rod which is bent in the plane of the end face of the bale and from which a tip, penetrating the end face of the bale, branches off.

3. Equipment according to one of Claims 1 or 2, characterised in that the bale abutment (3) consists of a piece in the form of part of a ring, which is located substantially in the plane of the end face of the bale fed to the combustion and is rotatable about an axis extending in the direction of advance of the bale and of which that end which is at the front in the direction of rotation is formed as a tip and is inclined in the direction of the bale.

4. Equipment according to one or more of Claims 1 to 3, characterised in that the bale abutment (3) is connected to a drive motor (14).

5. Equipment according to one or more of Claims 1 to 4, characterised in that at least one rod (5) for crumbling the burned residues is provided behind the bale abutment (3).

6. Equipment according to one or more of Claims 1 to 5, characterised in that the drive (14) of the bale abutment is controllable by means of a combustion chamber thermostat (22).

7. Equipment according to one or more of Claims 1 to 6, characterised in that the drive (14) of the bale abutment (3) is controllable by mechanical means.

8. Equipment according to one or more of Claims 1 to 7, characterised in that the speed of rotation of the bale abutment (3) is variable by means of direct speed control of the drive motor *via* an electronic control circuit.

9. Equipment according to one or more of Claims 1 to 8, characterised in that the useful-heat exchanger (54) is separate from the heating boiler, and a flue gas/combustion air preheater (7, 8) is provided between the useful-heat exchanger (54) and the heating boiler.

10. Equipment according to one or more of Claims 1 to 9, characterised in that a flue gas bypass pipe (55) protecting the useful-heat exchanger (54) is provided between the combustion air preheater (7, 8) and the stack (32).

11. Equipment according to one or more of Claims 1 to 10, characterised in that the bale feed device consists of a closed straw bale channel (2) with a bale-advancing device.

12. Equipment according to Claim 11, characterised in that the bale-advancing device consists of a rope pull or chain pull (24) with a thrust strap (34) applied to the rear of the bale.

13. Process for producing energy from straw, paper and the like, present in the form of highly compressed bales, with the use of a device according to one or more of Claims 1 to 12, characterised in that part-loading of the boiler is controlled by regulating the rotations of the bale abutment (3) and by heating the combustion air by means of quantities of heat which are not required at the useful-heat exchanger (54).

14. Process according to Claim 13, characterised in that the speed of rotation of the bale abutment (3) during the combustion process is controlled as a function of the quantities of heat generated in the combustion chamber and taken off in the useful-heat exchanger (54).

15. Process according to Claims 13 and/or 14, characterised in that excess quantities of heat are removed from the flue gas, before it enters the useful-heat exchanger (54), and are recycling *via* the combustion air (12) into the combustion chamber (1).

0 060 340

Fig. 1

Fig. 2

Fig. 3

Fig. 4

Fig. 5

Fig. 6

9